# EUROPEAN PATENT SPECIFICATION

(11) **EP 3 718 870 B1**
(45) Date of publication and mention of the grant of the patent: **09.06.2021**
(21) Application number: 19732868.5
(22) Date of filing: 22.02.2019
(51) Int. Cl.: B62J 11/00, F16M 11/04, F16M 13/00, H04M 1/02

(54) **CLAMPING BRACKET**
KLEMMHALTER
SUPPORT DE SERRAGE

(43) Date of publication of application: 07.10.2020
(73) Proprietor: Guangdong Gopod Group Co., Ltd., Shenzhen, Guangdong 518108 (CN)
(72) Inventor: LIAO, Zhuowen, Shenzhen, Guangdong 518000 (CN)
(74) Representative: Ipside
(86) International application number: PCT/CN2019/075878
(87) International publication number: WO 2020/168553

(56) References cited:
- CN-A- 106 347 538
- CN-U- 207 427 251
- CN-U- 208 053 240
- CN-U- 208 143 286
- US-A1- 2004 254 002

## Description

### Technical Field

The present invention relates to the technical field of vehicle-mounted accessories, and in particular to a clamping holder.

### Background Art

There are many types of existing clamping holders for mobile devices such as mobile phones, and most of the clamping holders are of a clamping structure or an inductive structure. The clamping structure requires two hands to operate, i.e. one hand holding a mobile device, and the other hand opening a clamping holder, and the two hands cooperate to place the mobile device between clamping arms of the clamping holder, and then release the clamping holder to clamp the mobile device. It is very inconvenient when the clamping structure is used during driving or in other occasions where one-handed operation is required, and the inductive structure needs to be applied to electronics and is susceptible to damage or insensitivity, thus influencing normal use.

Patent document US2004/254002A1 discloses a clamping device for holding mobile phones.

### Summary of the Invention

The purpose of the present invention is to provide a clamping holder, which aims to solve the technical problem that the existing clamping holder requires two hands to cooperate to complete the fixing action of an electronic device or requires the electronics to complete with quite insensitive induction.

The present invention is achieved by a clamping holder for fixing a mobile device, the clamping holder comprising:
a bottom housing;
a clamping mechanism comprising a first clamping tab on one side of the bottom housing and protruding from the bottom housing, and a second clamping tab on the other side of the bottom housing and arranged opposite the first clamping tab;
a driving mechanism comprising at least a first sliding connector connected to the first clamping tab and slidably connected to the bottom housing, wherein the first clamping tab can drive the first sliding connector to be able to move toward or away from the second clamping tab, and wherein the clamping mechanism has a clamping state in which the mobile device is clamped and a relaxed state in which the mobile device is released;
a reset mechanism having elasticity and two ends thereof being respectively connected to the bottom housing and the first sliding connector, and the reset mechanism having a compressed state in which the reset mechanism is compressed and generates an elastic restoring force when the first clamping tab moves toward the second clamping tab and a released state in which the elastic restoring force is released to cause the first clamping tab to move away from the second clamping tab; and
a limiting mechanism connected to the bottom housing, the limiting mechanism having an unlocked state in which the limiting mechanism keeps away from the first sliding connector and a locked state in which the limiting mechanism abuts against the first sliding connector to restrict movement of the first clamping tab away from the second clamping tab;
wherein when an external force toward the second clamping tab is applied to the first clamping tab to move the first clamping tab toward the second clamping tab, the reset mechanism is in the compressed state while the clamping mechanism is in the clamping state, such that the clamping mechanism clamps the mobile device;
when the limiting mechanism switches from the unlocked state to the locked state, the clamping mechanism remains in the compressed state; and
when the external force is eliminated and the limiting mechanism switches from the locked state to the unlocked state, the reset mechanism can switch from the compressed state to the released state, such that the clamping mechanism switches from the clamping state to the relaxed state.

In the clamping holder of the present invention, the limiting mechanism further comprises a rotation shaft connected to the bottom housing, and a locking assembly rotatably connected to the rotation shaft, wherein the locking assembly comprises an adapter rotatably connected to the rotation shaft, a locking catch connected to the adapter and used for abutting against the first sliding connector, and a handpiece connected to the adapter and used for handheld control.

In the clamping holder of the present invention, the locking catch is L-shaped and its free end can abut against the first sliding connector to restrict movement of the first clamping tab away from the second clamping tab.

In the clamping holder of the present invention, the handpiece comprises a press rod that is slidably connected to the bottom housing and movable toward or away from the first sliding connector, and a connecting rod with one end rotatably connected to the press rod and the other end connected to the adapter, wherein the press rod can drive the locking catch to move away from the first sliding connector when moving toward the first sliding connector so that the limiting mechanism switches from the locked state to the unlocked state, and drive the locking catch toward the first sliding connector when moving away from the first sliding connector so that the limiting mechanism switches from the unlocked state to the locked state.

In the clamping holder of the present invention, the locking assembly further comprises an elastic member with one end connected to the bottom housing and the other end connected to the press rod, wherein the extending direction of the elastic member is consistent with the movement direction of the press rod, the elastic member is compressed and generates an elastic restoring force when an external force is applied to the press rod to move the press rod toward the first sliding connector, and the press rod moves away from the first sliding connector under the elastic restoring force of the elastic member when the external force is eliminated.

In the clamping holder of the present invention, the first sliding connector has an insertion face on a side thereof facing the limiting mechanism, the insertion face is provided with multiple insertion slots at intervals and arranged parallel to each other, the extending direction of the insertion slots is perpendicular to the movement direction of the first sliding connector, and the limiting mechanism is adapted to be inserted in the insertion slots and has an abutting face abutting against the insertion face.

In the clamping holder of the present invention, the insertion slot has a V-shaped cross section, and the slope of the side wall, toward the first clamping tab, of the insertion slot allows the first sliding connector to apply an acting force perpendicular to the side wall to the limiting mechanism when the first sliding connector moves toward the second clamping tab so that the limiting mechanism slides outward along the side wall and the elastic member is compressed, and also the limiting mechanism abuts against the slot wall of an adjacent insertion slot again under the elastic restoring force of the elastic member when the limiting mechanism moves to the insertion slot.

In the clamping holder of the present invention, the driving mechanism further comprises a second sliding connector connected to the second clamping tab and slidably connected to the bottom housing, and a transmission member connected to the bottom housing, wherein the transmission member can drive the first sliding connector and the second sliding connector to simultaneously move in opposite directions by means of its own movement, so that the first clamping tab and the second clamping tab move toward each other to clamp the mobile device, or the first clamping tab and the second clamping tab move away from each other to release the mobile device.

In the clamping holder of the present invention, the transmission member comprises a large gear rotatably connected to the bottom housing, and a first clamping rack meshing with the large gear is provided on one side of the first sliding connector.

In the clamping holder of the present invention, a second clamping rack meshing with the large gear is provided on one side of the second sliding connector, the first clamping rack and the second clamping rack are arranged opposite each other, and the large gear is located between the first clamping rack and the second clamping rack and can simultaneously drive the first clamping rack and the second clamping rack to move in opposite directions.

In the clamping holder of the present invention, the bottom housing comprises an upper base plate, a lower base plate arranged opposite the upper base plate, and a side panel for connecting the upper base plate and the lower base plate, wherein an accommodation cavity is enclosed by the upper base plate, the lower base plate and the side panel together, the transmission member is located in the accommodation cavity, the side panel is provided with two insertion openings arranged opposite each other and a press opening spaced apart from the insertion openings, the first sliding connector and the second sliding connector are respectively disposed through the two insertion openings, and the limiting mechanism is disposed through the press opening.

In the clamping holder of the present invention, the clamping holder further comprises a first torsion spring connected to the first sliding connector, the first clamping tab is rotatably connected to the first sliding connector, and one end of the first torsion spring is connected to the first sliding connector and the other end thereof is connected to the first clamping tab; and the clamping holder further comprises a second torsion spring connected to the second sliding connector, the second clamping tab is rotatably connected to the second sliding connector, and one end of the second torsion spring is connected to the second sliding connector and the other end thereof is connected to the second clamping tab.

In the clamping holder of the present invention, the clamping holder further comprises a first roller rotatably connected on a side, facing the second clamping tab, of the first clamping tab and a second roller rotatably connected on a side, facing the first clamping tab, of the second clamping tab, the extending direction of the rotation axis of the first roller is perpendicular to the movement direction of the first sliding connector, and the extending direction of the rotation axis of the second roller is perpendicular to the movement direction of the second sliding connector.

In the clamping holder of the present invention, the first roller comprises the first roller rotatably connected to the first clamping tab and a first anti-slip member sheathed on the first roller, and the second roller comprises the second roller rotatably connected to the second clamping tab and a second anti-slip member sheathed on the second roller.

In the clamping holder of the present invention, the clamping holder further comprises a fixing mechanism connected to the bottom housing and used for connection to an external device.

The present invention has the following technical effects over the prior art: When a clamping operation is required, an acting force toward the second clamping tab is applied to the first clamping tab so that the first clamping tab moves toward the second clamping tab for a clamping action until the first clamping tab and the second clamping tab respectively abut against two sides of the mobile device, and at this point the reset mechanism is in the compressed state. When the limiting mechanism switches from the unlocked state to the locked state, the clamping mechanism cannot be stretched, that is, the first clamping tab cannot move away from the second clamping tab, so that the clamping mechanism can fix the clamping width to stably clamp the mobile device and prevent the mobile device from falling off. When the mobile device needs to be removed, it is only necessary to move the limiting mechanism away from the first sliding connector, so that the limiting mechanism switches from the locked state to the unlocked state, and at this point the reset mechanism switches from the compressed state to the released state, the first clamping tab is moved away from the second clamping tab under the elastic restoring force of the reset mechanism, and the clamping mechanism is stretched, thereby the mobile device can be removed. During use, the present invention can be controlled only by one hand, that is, the mobile device is pinched by one hand and then the other free fingers are used to push the first clamping tab to move toward the second clamping tab to realize the clamping of the mobile device by the clamping mechanism, or otherwise the limiting mechanism is operated such that same moves away from the first sliding connector to realize the stretching of the clamping mechanism to remove the mobile device. The present invention employs mechanical structure control, avoids the occurrence of insensitive induction usually appearing in electronics control, and is easy, quick and cost-effective.

### Brief Description of the Drawings

In order to more clearly explain the technical solutions in the embodiments of the present invention, the accompanying drawings to be used in the description of the embodiments of the present invention or the prior art will be briefly introduced below. Obviously, the accompanying drawings described below are merely some embodiments of the present invention, and a person of ordinary skill in the art would have obtained other drawings according to these drawings without involving any inventive effort.
Fig. 1 is a perspective structural schematic diagram of a clamping holder according to an embodiment of the present invention;
Fig. 2 is an exploded view of the clamping holder according to an embodiment of the present invention; and
Fig. 3 is a partial structural schematic diagram of the clamping holder according to an embodiment of the present invention.

### Description of Reference Numerals:

10. Bottom housing; 101. Insertion opening; 102. Press opening; 11. Upper base plate; 12. Lower base plate; 13. Side panel; 21. First clamping tab; 22. Second clamping tab; 31. First sliding connector; 311. First clamping rack; 3111. Insertion slot; 321. Second clamping rack; 32. Second sliding connector; 33. Transmission member; 40. Reset mechanism; 50. Limiting mechanism; 51. Rotation shaft; 52. Locking assembly; 521. Adapter; 522. Locking catch; 523. Handpiece; 5231. Press rod; 5232. Connecting rod; 5233. Elastic member; 60. Fixing mechanism; 711. First roller; 712. Second roller; 721. First anti-slip member; 722. Second anti-slip member; 81. First torsion spring; 82. Second torsion spring.

### Detailed Description of Embodiments

Embodiments of the present invention will be described below in detail, and examples of the embodiments are shown in the drawings, wherein the same or similar reference numerals throughout the drawings represent the same or similar elements or the elements having the same or similar functions. The embodiments described below with reference to the accompanying drawings are exemplary and are intended to be illustrative of the present invention, and will not be interpreted as limiting the present invention.

Wherein the terms "first" and "second" are for descriptive purposes only and should not be construed as indicating or implying relative importance or implicitly indicating the number of technical features indicated. Thus, the features defined with "first" and "second" can explicitly or implicitly include one or more of the features. In the description of the present invention, the word "multiple" means two or more, unless otherwise explicitly and specifically defined.

In the description of the present invention, the terms such as "installation", "connecting", "connection" and "fixing" should be understood in a broad sense, for example, it may be a fixed connection or a detachable connection or be integrated, may be a mechanical connection or an electrical connection, may be a direct connection or an indirect connection via an intermediate medium, or may be the communication between the inside of two elements or the interaction relationship between the two elements, unless otherwise explicitly specified or defined. For those of ordinary skill in the art, the specific meaning of the terms mentioned above in the present invention should be construed according to specific circumstances.

In order to make the purposes, technical solutions and advantages of the present invention clearer, the present invention is further illustrated in detail below in conjunction with the accompanying drawings and embodiments.

The present invention provides a clamping holder for clamping a mobile device. The mobile device refers to a device that can be moved, for example an electronic device such as a mobile phone or a tablet, or other mechanical devices that need to be clamped.

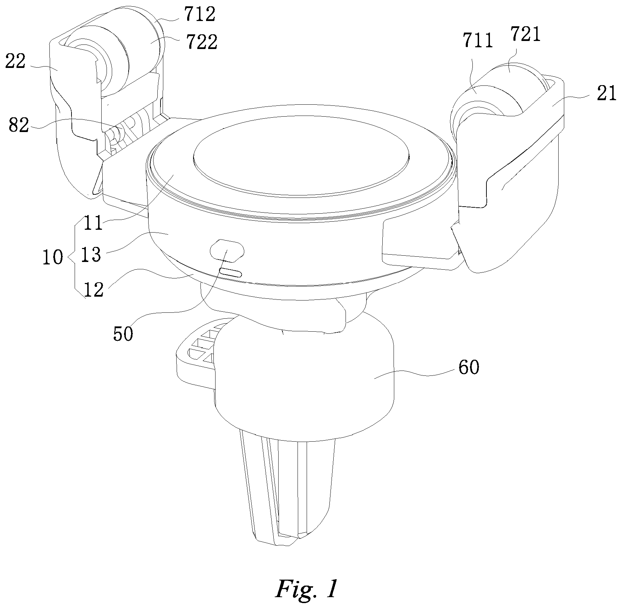

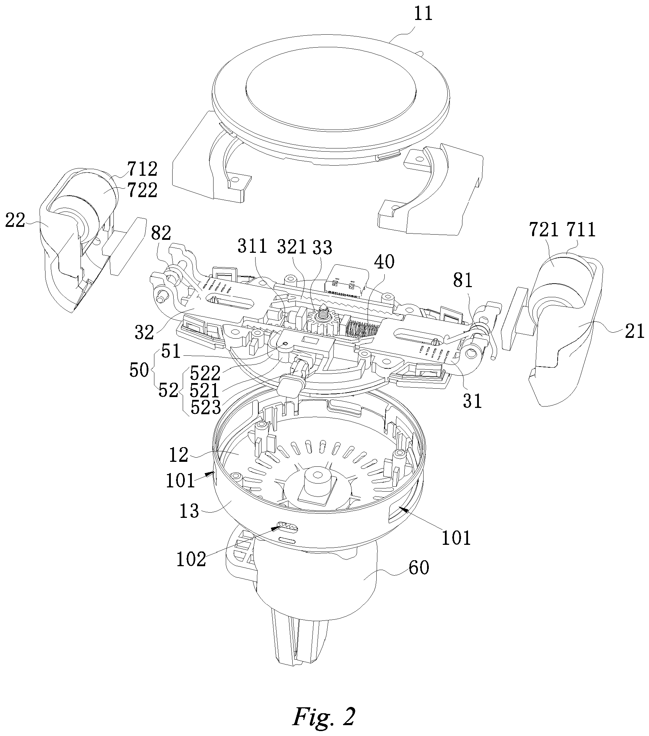

Referring to Fig. 1 and Fig. 2, the clamping holder of the embodiment of the present invention comprises a bottom housing 10, a clamping mechanism, a driving mechanism, a reset mechanism 40, and a limiting mechanism 50.

Referring to Figs. 1 to 3, wherein the clamping mechanism comprises a first clamping tab 21 on one side of the bottom housing 10 and protruding from the bottom housing 10, and a second clamping tab 22 on the other side of the bottom housing 10 and arranged opposite the first clamping tab 21. The first clamping tab 21 and the second clamping tab 22 can be respectively located on two opposite sides of the mobile device to clamp the mobile device.

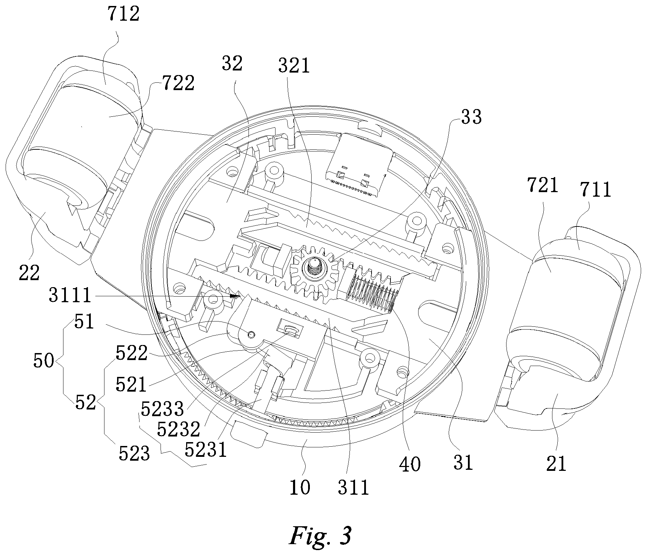

Referring to Fig. 2 and Fig. 3, the driving mechanism comprises a first sliding connector 31 connected to the first clamping tab 21 and slidably connected to the bottom housing 10, and the first clamping tab 21 can drive the first sliding connector 31 to be able to move toward or away from the second clamping tab 22, wherein the clamping mechanism has a clamping state in which the mobile device is clamped and a relaxed state in which the mobile device is released. The second clamping tab 22 can be fixedly connected to the bottom housing 10 to simplify the structure to facilitate processing, or can also be slidably connected to the bottom housing 10 for moving close to or away from the first clamping tab 21 synchronously therewith, so as to achieve quick adjustment. Wherein the first clamping tab 21 can move toward or away from the second clamping tab 22 along a straight line as a movement path that extends through the first clamping tab and the second clamping tab 22, or can also move toward or away from the second clamping tab 22 along other non-straight line paths.

Referring to Fig. 2 and Fig. 3, the reset mechanism 40 has elasticity and two ends thereof are respectively connected to the bottom housing 10 and the first sliding connector 31. The reset mechanism 40 is located on the movement path of the first sliding connector 31 for a clamping action and the deformation direction thereof is consistent with the extending direction of the movement path of the first sliding connector 31. The reset mechanism 40 has a compressed state in which the reset mechanism is compressed and generates an elastic restoring force when the first clamping tab 21 moves toward the second clamping tab 22 and a released state in which the elastic restoring force is released to cause the first clamping tab 21 to move away from the second clamping tab 22. The reset mechanism 40 is preferably a spring.

Referring to Fig. 2 and Fig. 3, the limiting mechanism 50 is connected to the bottom housing 10. The limiting mechanism 50 has an unlocked state in which the limiting mechanism keeps away from the first sliding connector 31 and a locked state in which the limiting mechanism abuts against the first sliding connector 31 to prevent the first clamping tab 21 from moving away from the second clamping tab 22. A user presses, pulls or rotates the limiting mechanism 50 to cause the limiting mechanism 50 to move away from or abut against the first sliding connector 31. The first sliding connector 31 has an insertion face on a side thereof facing the limiting mechanism 50, and the limiting mechanism 50 has an abutting face for abutting against the insertion face. The limiting mechanism 50 can restrict the movement of the first sliding connector 31 by a frictional force. If the abutting face of the two is provided as a rough face, the movement of the first sliding connector 31 can also be limited by means of insertion, for example, by providing an insertion structure cooperating with each other on the insertion face or the abutting face.

When a clamping operation is required, an acting force toward the second clamping tab 22 is applied to the first clamping tab 21 to move the first clamping tab 21 toward the second clamping tab 22 so that the clamping mechanism clamps the mobile device until the first clamping tab 21 and the second clamping tab 22 respectively abut against two sides of the mobile device, that is, the clamping mechanism is in the clamping state, and at this point the reset mechanism 40 is in the compressed state.

When the limiting mechanism 50 switches from the unlocked state to the locked state, the clamping mechanism cannot be stretched and remains in the compressed state, that is, the first clamping tab 21 cannot move away from the second clamping tab 22, so that the clamping mechanism can fix the clamping width, thus completing the adjustment of the distance between the first clamping tab 21 and the second clamping tab 22 to stably clamp the mobile device and be adapted to the requirements of different mobile device widths, thereby preventing the mobile device from falling off.

When the mobile device needs to be removed, it is only necessary to eliminate external forces and then press or pull the limiting mechanism 50 away from the first sliding connector 31, so that the limiting mechanism 50 switches from the locked state to the unlocked state, and at this point the reset mechanism 40 switches from the compressed state to the released state, the first clamping tab 21 is moved away from the second clamping tab 22 under the elastic restoring force of the reset mechanism 40, and the clamping mechanism switches from the clamping state to the relaxed state, thereby the mobile device can be removed.

During use, the present invention can be controlled only by one hand without need of cooperation of two hands, that is, the mobile device is pinched by one hand and then the other free fingers are used to push the first clamping tab 21 to move toward the second clamping tab 22 to realize the clamping of the mobile device by the clamping mechanism, or otherwise the limiting mechanism 50 is operated such that same moves away from the first sliding connector 31 to realize the stretching of the clamping mechanism to remove the mobile device. The present invention employs mechanical structure control, avoids the occurrence of insensitive induction usually appearing in electronics control, allows the clamping width to be adjustable, is easy and quick to use and is cost-effective.

Referring to Fig. 2 and Fig. 3, further, the limiting mechanism 50 further comprises a rotation shaft 51 connected to the bottom housing 10 and a locking assembly 52 rotatably connected to the rotation shaft 51. The locking assembly 52 comprises an adapter 521 rotatably connected to the rotation shaft 51, a locking catch 522 connected to the adapter 521 and used for abutting against the first sliding connector 31, and a handpiece 523 connected to the adapter 521 and used for handheld control. The limiting mechanism 50 makes the movement directions of the handpiece 523 and the locking catch 522 opposite each other by providing the rotation shaft 51 and the adapter 521, and adjusts the locking catch 522 to abut against or disengage from the first sliding connector 31 by controlling the rotation of the handpiece 523. Preferably, the handpiece 523 and the locking catch 522 are located at two opposite ends of the adapter 521, and the adapter 521 is sheathed on the rotation shaft 51.

Referring to Fig. 2 and Fig. 3, preferably, the locking catch 522 is L-shaped and its free end is bent toward the first sliding connector 31. The free end of the locking catch 522 can be driven by the handpiece 523 to abut against the first sliding connector 31 to restrict movement of the first clamping tab 21 away from the second clamping tab 22. In this way, the free end of the locking catch 522 can move in the movement direction approximately perpendicular to the first sliding connector 31, preventing the movement of the limiting mechanism 50 from being transferred to the first sliding connector 31 to follow its movement.

Referring to Fig. 3, preferably, the handpiece 523 comprises a press rod 5231 that is slidably connected to the bottom housing 10 and movable toward or away from the first sliding connector 31, and a connecting rod 5232 with one end rotatably connected to the press rod 5231 and the other end connected to the adapter 521. The press rod 5231 can drive the locking catch 522 to move away from the first sliding connector 31 when moving toward the first sliding connector 31 so that the limiting mechanism 50 switches from the locked state to the unlocked state, and drive the locking catch 522 to move toward the first sliding connector 31 when moving away from the first sliding connector 31 so that the limiting mechanism 50 switches from the unlocked state to the locked state. The press rod 5231 is rotatably connected to the connecting rod 5232, so that the linear movement of the press rod 5231 can drive the connecting rod 5232 to rotate. When the press rod 5231 is pressed, the connecting rod 5232 drives the locking catch 522 to rotate, so that the free end of the locking catch 522 keeps away from the first sliding connector 31, and the limiting mechanism 50 switches from the locked state to the unlocked state. When the press rod 5231 is pulled, the connecting rod 5232 drives the locking catch 522 to rotate, so that the free end of the locking catch 522 moves toward the first sliding connector 31 and abuts against the first sliding connector 31, and the limiting mechanism 50 switches from the unlocked state to the locked state.

Referring to Fig. 3, further, the locking assembly 52 further comprises an elastic member 5233 with one end connected to the bottom housing 10 and the other end connected to the press rod 5231. The elastic member 5233 is located in the pressing direction of the press rod 5231, and the deformation direction of the elastic member 5233 is consistent with the movement direction of the press rod 5231. When an external force is applied to the press rod 5231 to move the press rod 5231 toward the first sliding connector 31, the elastic member 5233 is compressed and generates an elastic restoring force, and the connecting rod 5232 drives the locking catch 522 to rotate, so that the free end of the locking catch 522 keeps away from the first sliding connector 31, and the limiting mechanism 50 switches from the locked state to the unlocked state. When the external force is eliminated, the press rod 5231 moves away from the first sliding connector 31 under the elastic restoring force of the elastic member 5233, that is, the elastic member 5233 pulls the press rod 5231, and the connecting rod 5232 drives the locking catch 522 to rotate, so that the free end of the locking catch 522 moves toward the first sliding connector 31 and abuts against the first sliding connector 31, and the limiting mechanism 50 switches from the unlocked state to the locked state. The elastic member 5233 is preferably a spring, and the spring can be sheathed on the press rod 5231.

Referring to Fig. 3, in particular, the insertion face is provided with multiple insertion slots 3111 at intervals and arranged parallel to each other. The extending direction of the insertion slots 3111 is perpendicular to the movement direction of the first sliding connector 31, and the limiting mechanism 50 is adapted to be inserted in the insertion slots 3111 to restrict the movement of the first sliding connector 31.

Referring to Fig. 3, preferably, the insertion slot 3111 has a V-shaped cross section with the slope of the side wall thereof toward the first clamping tab 21 being greater than the slope of the side wall thereof away from the first clamping tab 21. The abutting face is in the form of a sharp corner and matches and abuts against two slot walls of one of the insertion slots 3111. The slope of the side wall, toward the first clamping tab 21, of the insertion slot 3111 allows the first sliding connector 31 to apply an acting force perpendicular to the side wall to the limiting mechanism 50 when the first sliding connector moves toward the second clamping tab 22 so that the limiting mechanism 50 slides outward along the side wall and the elastic member 5233 is compressed, and also the limiting mechanism 50 abuts against the slot wall of an adjacent insertion slot 3111 again under the elastic restoring force of the elastic member 5233 when the limiting mechanism moves to the insertion slot 3111. In this way, during the movement of the first clamping tab 21 toward the second clamping tab 22, the limiting mechanism 50 can always be in the locked state. Because the slope of the side wall, close to the first clamping tab 21, of the insertion slot 3111 is smaller, the first sliding connector 31 can continue to move toward the second clamping tab 22, and at this point the elastic member 5233 carries out the actions of compressing and releasing the elastic restoring force through reciprocation, so that the limiting mechanism 50 is always attached to the insertion face. The side wall, away from the first clamping tab 21, of the insertion slot 3111 has a greater slope or is provided perpendicular to the movement direction of the first sliding connector 31, so as to be able to restrict movement of the first sliding connector 31 away from the second clamping tab 22.

Referring to Fig. 2 and Fig. 3, further, the driving mechanism further comprises a second sliding connector 32 connected to the second clamping tab 22 and slidably connected to the bottom housing 10, and a transmission member 33 connected to the bottom housing 10. The transmission member 33 can drive the first sliding connector 31 and the second sliding connector 32 to simultaneously move in opposite directions by means of its own movement, so that the first clamping tab 21 and the second clamping tab 22 move toward each other to clamp the mobile device, or the first clamping tab and the second clamping tab 22 move away from each other to release the mobile device. In this way, the transmission member 33 can simultaneously or respectively drive the first sliding connector 31 and the second sliding connector 32 to move, so that the first clamping tab 21 and the second clamping tab 22 can simultaneously approach each other or move away from each other, thus improving the working efficiency.

Referring to Fig. 2 and Fig. 3, further, the transmission member 33 comprises a large gear rotatably connected to the bottom housing 10, wherein a first clamping rack 311 meshing with the large gear is provided on one side of the first sliding connector 31, the first clamping rack 311 is strip-shaped, and the movement of the first sliding connector 31 can drive the large gear to rotate. A second clamping rack 321 meshing with the large gear is provided on one side of the second sliding connector 32. The second clamping rack 321 is strip-shaped, and the large gear can in turn drive the second sliding connector 32 to approach or move away from the first clamping tab 21 by means of the rotation thereof, that is, the user causes the second clamping tab 22 to move close to or away from the first clamping tab 21 by controlling the movement of the first clamping tab 21 close to or away from the second clamping tab 22. Preferably, the first clamping rack 311 and the second clamping rack 321 are arranged opposite each other, and the large gear is located between the first clamping rack 311 and the second clamping rack 321 and can simultaneously cause the first clamping rack 311 and the second clamping rack 321 to move in opposite directions. As shown, in the embodiment of the present invention, the first sliding connector 31 is located above the large gear, and the second sliding connector 32 is located below the large gear. When the user pushes the first clamping rack 311 to move toward the second clamping tab 22, the large gear rotates clockwise, and at the same time drives the second clamping rack 321 to move toward the first clamping tab 21, that is, the first clamping tab 21 and the second clamping tab 22 approach each other for the clamping action. When the user eliminates the external force on the first clamping tab 21 and the limiting mechanism 50 switches from the locked state to the unlocked state, the first sliding connector 31 moves away from the second clamping tab 22 under the elastic restoring force of the reset mechanism 40, and the large gear rotates counter-clockwise and at the same time drives the second clamping rack 321 to move away from the first clamping tab 21, that is, the first clamping tab 21 and the second clamping tab 22 move away from each other to release the mobile device.

Referring to Figs. 1 and 2, in particular, the bottom housing 10 comprises an upper base plate 11, a lower base plate 12 arranged opposite the upper base plate 11, and a side panel 13 for connecting the upper base plate 11 and the lower base plate 12. An accommodation cavity is enclosed by the upper base plate 11, the lower base plate 12 and the side panel 13 together, and the transmission member 33 is located in the accommodation cavity. The side panel 13 is provided with two insertion openings 101 arranged opposite each other and a press opening 102 spaced apart from the insertion openings 101. The first sliding connector 31 and the second sliding connector 32 are respectively disposed through the two insertion openings 101. A first limiting member is disposed through the press opening 102 and can slide in the extending direction of the press opening 102 in the unlocked state. The upper base plate 11 is used for abutting against the mobile device to restrict the position of the mobile device. In the embodiment of the present invention, both the upper base plate 11 and the lower base plate 12 are circular.

Referring to Fig. 1 and Fig. 2, further, the clamping holder further comprises a first torsion spring 81 connected to the first sliding connector 31, a second torsion spring 82 connected to the second sliding connector 32, a first roller 711 rotatably connected on a side, facing the second clamping tab 22, of the first clamping tab 21, and a second roller 712 rotatably connected on a side, facing the first clamping tab 21, of the second clamping tab 22.

The first clamping tab 21 is rotatably connected to the first sliding connector 31. One end of the first torsion spring 81 is connected to the first sliding connector 31 and the other end thereof is connected to the first clamping tab 21. The second clamping tab 22 is rotatably connected to the second sliding connector 32. One end of the second torsion spring 82 is connected to the second sliding connector 32 and the other end thereof is connected to the second clamping tab 22. The first torsion spring 81 has a limiting effect on the first clamping tab 21. In a free state, a certain included angle is kept between the first clamping tab 21 and the first sliding connector 31 due to the supporting action of the first torsion spring 81. When the first clamping tab 21 and the second clamping tab 22 clamp the mobile device, the distance between the two can be adjusted to be slightly smaller than the width of the mobile device, so that during the clamping process, the first clamping tab 21 is stretched and the first torsion spring 81 is twisted and has a torsional restoring force to return to the original shape in order to clamp the mobile device between the first clamping tab 21 and the second clamping tab 22. The operation and principle of the second torsion spring 82 are similar to those of the first torsion spring 81, and are not described herein. In this way, the user can first adjust the distance between the first clamping tab 21 and the second clamping tab 22, and then push the mobile device into the gap between the two, and the mobile device is clamped by means of the torsional forces of the first torsion spring 81 and of the second torsion spring 82.

Referring to Fig. 1 to Fig. 3, in particular, the extending direction of the rotation axis of the first roller 711 is perpendicular to the movement direction of the first sliding connector 31, and the extending direction of the rotation axis of the second roller 712 is perpendicular to the movement direction of the second sliding connector 32. In this way, the mobile device can move toward the upper base plate 11 in a direction perpendicular to the upper base plate 11 to be clamped between the first clamping tab 21 and the second clamping tab 22, and the first roller 711 and the second roller 712 can rotate with the movement of the mobile device to prevent the wear between the mobile device and the first clamping tab 21 or the second clamping tab 22, thus reducing the friction during the insertion of the mobile device.

Referring to Fig. 1 to Fig. 3, preferably, the first roller 711 comprises the first roller 711 rotatably connected to the first clamping tab 21, and a first anti-slip member 721 sheathed on the first roller 711. The second roller 712 comprises the second roller 712 rotatably connected to the second clamping tab 22, and a second anti-slip member 722 sheathed on the second roller 712. The first anti-slip member 721 can play an anti-slip role, so that the first roller 711 can follow the movement of the mobile device to reduce wear.

Referring to Fig. 1 and Fig. 2, further, the clamping holder further comprises a fixing mechanism 60 connected to the bottom housing 10 and used for connection to an external device. The fixing mechanism 60 is used for being clamped on an external device, and the external device may be a car interior or other structure that requires a mobile device to be fixed thereon.

The above embodiments are merely preferred embodiments of the present invention but not intended to limit the present invention, and any modifications, equivalent replacements, improvements, etc. should be included within the scope of protection of the appended claims.

## Claims

1. A clamping holder for fixing a mobile device, comprising:
a bottom housing (10);
a clamping mechanism comprising a first clamping tab (21) on one side of the bottom housing (10) and protruding from the bottom housing, and a second clamping tab (22) on the other side of the bottom housing and arranged opposite the first clamping tab (21);
a driving mechanism comprising at least a first sliding connector (31) connected to the first clamping tab (21) and slidably connected to the bottom housing (10), wherein the first clamping tab (21) can drive the first sliding connector (31) to be able to move toward or away from the second clamping tab (22), and wherein the clamping mechanism has a clamping state in which the mobile device is clamped and a relaxed state in which the mobile device is released;
a reset mechanism (40) having elasticity and two ends thereof being respectively connected to the bottom housing (10) and the first sliding connector (31), and the reset mechanism (40) having a compressed state in which the reset mechanism is compressed and generates an elastic restoring force when the first clamping tab (21) moves toward the second clamping tab (22) and a released state in which the elastic restoring force is released to cause the first clamping tab (21) to move away from the second clamping tab (22); and
a limiting mechanism (50) connected to the bottom housing (10), the limiting mechanism (50) having an unlocked state in which the limiting mechanism keeps away from the first sliding connector (31) and a locked state in which the limiting mechanism (50) abuts against the first sliding connector (31) to restrict movement of the first clamping tab (21) away from the second clamping tab (22);
wherein when an external force toward the second clamping tab (22) is applied to the first clamping tab (21) to move the first clamping tab toward the second clamping tab, the reset mechanism (40) is in the compressed state while the clamping mechanism is in the clamping state, such that the clamping mechanism clamps the mobile device;
when the limiting mechanism (50) switches from the unlocked state to the locked state, the clamping mechanism remains in the compressed state; and
when the external force is eliminated and the limiting mechanism (50) switches from the locked state to the unlocked state, the reset mechanism (40) can switch from the compressed state to the released state, such that the clamping mechanism switches from the clamping state to the relaxed state,
**characterized in that** the limiting mechanism (50) further comprises a rotation shaft (51) connected to the bottom housing (10), and a locking assembly (52) rotatably connected to the rotation shaft, wherein the locking assembly comprises an adapter (521) rotatably connected to the rotation shaft (51), a L-shaped locking catch (522) connected to the adapter (521) and used for abutting against the first sliding connector (31), and a handpiece (523) connected to the adapter and used for handheld control.

2. The clamping holder of claim 1, **characterized in that** the free end of the locking catch (522) can abut against the first sliding connector (31) to restrict movement of the first clamping tab (21) away from the second clamping tab (22).

3. The clamping holder of claim 2, **characterized in that** the handpiece (523) comprises a press rod (5231) that is slidably connected to the bottom housing (10) and movable toward or away from the first sliding connector (31), and a connecting rod (5232) with one end rotatably connected to the press rod (5231) and the other end connected to the adapter (521), wherein the press rod (5231) can drive the locking catch (522) to move away from the first sliding connector (31) when moving toward the first sliding connector (31) so that the limiting mechanism (50) switches from the locked state to the unlocked state, and drive the locking catch to move toward the first sliding connector (31) when moving away from the first sliding connector (31) so that the limiting mechanism (50) switches from the unlocked state to the locked state.

4. The clamping holder of claim 3, **characterized in that** the locking assembly (52) further comprises an elastic member (5233) with one end connected to the bottom housing (10) and the other end connected to the press rod (5231), wherein the extending direction of the elastic member (5233) is consistent with the movement direction of the press rod (5231), the elastic member (5233) is compressed and generates an elastic restoring force when an external force is applied to the press rod (5231) to move the press rod toward the first sliding connector (31), and the press rod moves away from the first sliding connector under the elastic restoring force of the elastic member (5233) when the external force is eliminated.

5. The clamping holder of claim 4, **characterized in that** the first sliding connector (31) has an insertion face on a side thereof facing the limiting mechanism (50), the insertion face is provided with multiple insertion slots (3111) at intervals and arranged parallel to each other, the extending direction of the insertion slots (3111) is perpendicular to the movement direction of the first sliding connector (31), and the limiting mechanism is adapted to be inserted in the insertion slots (3111) and has an abutting face abutting against the insertion face.

6. The clamping holder of claim 5, **characterized in that** the insertion slot (3111) has a V-shaped cross section, and the slope of the side wall, toward the first clamping tab (21), of the insertion slot (3111) allows the first sliding connector (31) to apply an acting force perpendicular to the side wall to the limiting mechanism (50) when the first sliding connector (31) moves toward the second clamping tab (22) so that the limiting mechanism (50) slides outward along the side wall and the elastic member (5233) is compressed, and also the limiting mechanism abuts against the slot wall of an adjacent insertion slot (3111) again under the elastic restoring force of the elastic member (5233) when the limiting mechanism moves to the insertion slot (3111).

7. The clamping holder of any one of claims 1-6, **characterized in that** the driving mechanism further comprises a second sliding connector (32) connected to the second clamping tab (22) and slidably connected to the bottom housing (10), and a transmission member (33) connected to the bottom housing, wherein the transmission member (33) can drive the first sliding connector (31) and the second sliding connector (32) to simultaneously move in opposite directions by means of its own movement, so that the first clamping tab (21) and the second clamping tab (22) move toward each other to clamp the mobile device, or the first clamping tab (21) and the second clamping tab (22) move away from each other to release the mobile device.

8. The clamping holder of claim 7, **characterized in that** the transmission member (33) comprises a large gear rotatably connected to the bottom housing (10), and a first clamping rack (311) meshing with the large gear is provided on one side of the first sliding connector (31).

9. The clamping holder of claim 8, **characterized in that** a second clamping rack (321) meshing with the large gear is provided on one side of the second sliding connector (32), the first clamping rack (311) and the second clamping rack are arranged opposite each other, and the large gear is located between the first clamping rack (311) and the second clamping rack (321) and can simultaneously drive the first clamping rack (311) and the second clamping rack to move in opposite directions.

10. The clamping holder of claim 9, **characterized in that** the bottom housing (10) comprises an upper base plate (11), a lower base plate (12) arranged opposite the upper base plate, and a side panel (13) for connecting the upper base plate (11) and the lower base plate (12), wherein an accommodation cavity is enclosed by the upper base plate (11), the lower base plate (12) and the side panel (13) together, the transmission member (33) is located in the accommodation cavity, the side panel is provided with two insertion openings (101) arranged opposite each other and a press opening (102) spaced apart from the insertion openings (101), the first sliding connector (31) and the second sliding connector (32) are respectively disposed through the two insertion openings (101), and the limiting mechanism (50) is disposed through the press opening (102).

11. The clamping holder of claim 7, **characterized in that** the clamping holder further comprises a first torsion spring (81) connected to the first sliding connector (31), the first clamping tab (21) is rotatably connected to the first sliding connector, and one end of the first torsion spring (81) is connected to the first sliding connector (31) and the other end thereof is connected to the first clamping tab; and the clamping holder further comprises a second torsion spring (82) connected to the second sliding connector (32), the second clamping tab (22) is rotatably connected to the second sliding connector (32), and one end of the second torsion spring (82) is connected to the second sliding connector (32) and the other end thereof is connected to the second clamping tab (22).

12. The clamping holder of claim 11, **characterized in that** the clamping holder further comprises a first roller (711) rotatably connected on a side, facing the second clamping tab (22), of the first clamping tab (21) and a second roller (712) rotatably connected on a side, facing the first clamping tab, of the second clamping tab, the extending direction of the rotation axis of the first roller (711) is perpendicular to the movement direction of the first sliding connector (31), and the extending direction of the rotation axis of the second roller (712) is perpendicular to the movement direction of the second sliding connector (32).

13. The clamping holder of claim 12, **characterized in that** the first roller comprises the first roller (711) rotatably connected to the first clamping tab (21) and a first anti-slip member (721) sheathed on the first roller (711), and the second roller comprises the second roller (712) rotatably connected to the second clamping tab (22) and a second anti-slip member (722) sheathed on the second roller (712).

14. The clamping holder of any one of claims 1-6, **characterized in that** the clamping holder further comprises a fixing mechanism (60) connected to the bottom housing (10) and used for connection to an external device.

## Patentansprüche

1. Klemmhalter zum Befestigen einer beweglichen Vorrichtung, umfassend:
ein Untergehäuse (10);
einen Klemmmechanismus, der eine erste Klemmlasche (21) auf einer Seite des Untergehäuses (10) umfasst, und aus dem Untergehäuse hervorsteht, und eine zweite Klemmlasche (22) auf der anderen Seite des Untergehäuses (10), und gegenüber der ersten Klemmlasche (21) angeordnet;
einen Antriebsmechanismus, der mindestens einen ersten Schiebesteckverbinder (31) umfasst, der mit der ersten Klemmlasche (21) verbunden ist, und verschiebbar mit dem Untergehäuse (10) verbunden ist, wobei die erste Klemmlasche (21) den ersten Schiebesteckverbinder (31) antreiben kann, um imstande zu sein, sich zur zweiten Klemmlasche (22) hin- oder davon wegzubewegen, und wobei der Klemmmechanismus einen Klemmzustand aufweist, in dem die bewegliche Vorrichtung geklemmt wird, und einen gelösten Zustand, in dem die bewegliche Vorrichtung freigegeben wird;
einen Rücksetzmechanismus (40), der Elastizität aufweist, und zwei Enden davon jeweils mit dem Untergehäuse (10) und dem ersten Schiebesteckverbinder (31) verbunden sind, und wobei der Rücksetzmechanismus (40) einen komprimierten Zustand aufweist, in dem der Rücksetzmechanismus komprimiert ist und eine elastische Rückstellkraft erzeugt, wenn sich die erste Klemmlasche (21) zur zweiten Klemmlasche (22) bewegt, und einen freigegebenen Zustand, in dem die elastische Rückstellkraft freigegeben ist, um zu bewirken, dass sich die erste Klemmlasche (21) von der zweiten Klemmlasche (22) wegbewegt; und
einen Begrenzungsmechanismus (50), der mit dem Untergehäuse (10) verbunden ist, wobei der Begrenzungsmechanismus (50) einen unverriegelten Zustand aufweist, in dem der Begrenzungsmechanismus dem ersten Schiebesteckverbinder (31) fernbleibt, und einen verriegelten Zustand, in dem der Begrenzungsmechanismus (50) am ersten Schiebesteckverbinder (31) anliegt, um die Bewegung der ersten Klemmlasche (21) weg von der zweiten Klemmlasche (22) einzugrenzen;
wobei, wenn eine externe Kraft zur zweiten Klemmlasche (22) hin an die erste Klemmlasche (21) angelegt wird, um die erste Klemmlasche zur zweiten Klemmlasche zu bewegen, der Rücksetzmechanismus (40) in dem komprimierten Zustand ist, während der Klemmmechanismus im Klemmzustand ist, sodass der Klemmmechanismus die bewegliche Vorrichtung klemmt;
wenn der Begrenzungsmechanismus (50) vom unverriegelten Zustand in den verriegelten Zustand umschaltet, der Klemmmechanismus im komprimierten Zustand verbleibt; und wenn die externe Kraft beseitigt wird, und der Begrenzungsmechanismus (50) vom verriegelten Zustand in den unverriegelten Zustand umschaltet, der Rücksetzmechanismus (40) vom komprimierten Zustand in den freigegebenen Zustand umschalten kann, sodass der Klemmmechanismus vom Klemmzustand in den gelösten Zustand umschaltet,
**dadurch gekennzeichnet, dass** der Begrenzungsmechanismus (50) weiter eine Drehwelle (51) umfasst, die mit dem Untergehäuse (10) verbunden ist, und eine Verriegelungsanordnung (52), die drehbar mit der Drehwelle verbunden ist, wobei die Verriegelungsanordnung einen Adapter (521) umfasst, der drehbar mit der Drehwelle (51) verbunden ist, eine L-förmige Rastnase (522), die mit dem Adapter (521) verbunden ist, und verwendet wird, um an dem ersten Schiebesteckverbinder (31) anzuliegen, und ein Handstück (523), das mit dem Adapter verbunden ist und zur Regelung von Hand verwendet wird.

2. Klemmhalter nach Anspruch 1, **dadurch gekennzeichnet, dass** das freie Ende der Rastnase (522) an dem ersten Schiebesteckverbinder (31) anliegen kann, um die Bewegung der ersten Klemmlasche (21) weg von der zweiten Klemmlasche (22) einzugrenzen.

3. Klemmhalter nach Anspruch 2, **dadurch gekennzeichnet, dass** das Handstück (523) eine Pressstange (5231) umfasst, die gleitend mit dem Untergehäuse (10) verbunden ist und zum ersten Schiebesteckverbinder (31) hin- oder davon wegbeweglich ist, und eine Verbindungsstange (5232), mit einem Ende, das drehbar mit der Pressstange (5231) verbunden ist, und das andere Ende mit dem Adapter (521) verbunden ist, wobei die Pressstange (5231) beim Bewegen zum ersten Schiebesteckverbinder (31) die Rastnase (522) antreiben kann, um sich von dem ersten Schiebesteckverbinder (31) wegzubewegen, sodass der Begrenzungsmechanismus (50) von dem verriegelten Zustand in den unverriegelten Zustand umschaltet, und beim Wegbewegen von dem ersten Schiebesteckverbinder (31) die Rastnase antreibt, um sich zum ersten Schiebesteckverbinder (31) zu bewegen, sodass der Begrenzungsmechanismus (50) von dem unverriegelten Zustand in den verriegelten Zustand umschaltet.

4. Klemmhalter nach Anspruch 3, **dadurch gekennzeichnet, dass** die Verriegelungsanordnung (52) weiter ein elastisches Glied (5233) mit einem Ende umfasst, das mit dem Untergehäuse (10) verbunden ist, und dem anderen Ende, das mit der Pressstange (5231) verbunden ist, wobei die Erstreckungsrichtung des elastischen Glieds (5233) im Einklang mit der Bewegungsrichtung der Pressstange (5231) ist, das elastische Glied (5233) komprimiert ist und eine elastische Rückstellkraft erzeugt, wenn eine externe Kraft an die Pressstange (5231) angelegt wird, um die Pressstange zum ersten Schiebesteckverbinder (31) zu bewegen, und sich die Pressstange unter der elastischen Rückstellkraft des elastischen Glieds (5233) von dem ersten Schiebesteckverbinder wegbewegt, wenn die externe Kraft beseitigt wird.

5. Klemmhalter nach Anspruch 4, **dadurch gekennzeichnet, dass** der erste Schiebesteckverbinder (31) eine Einführungsfläche auf einer Seite davon aufweist, die dem Begrenzungsmechanismus (50) zugewandt ist, wobei die Einführungsfläche mit mehreren Einführungsschlitzen (3111) in Intervallen und parallel zueinander bereitgestellt ist, wobei die Erstreckungsrichtung der Einführungsschlitze (3111) senkrecht zur Bewegungsrichtung des ersten Schiebesteckverbinders (31) verläuft, und der Begrenzungsmechanismus anagepasst ist, um in die Einführungsschlitze (3111) eingeführt zu werden, und eine Anlegefläche aufweist, die an der Einführungsfläche anliegt.

6. Klemmhalter nach Anspruch 5, **dadurch gekennzeichnet, dass** der Einführungsschlitz (3111) einen V-förmigen Querschnitt aufweist, und die Neigung der Seitenwand zur ersten Klemmlasche (21) des Einführungsschlitzes (3111) es dem ersten Schiebesteckverbinder (31) ermöglicht, eine Wirkkraft senkrecht zur Seitenwand an den Begrenzungsmechanismus (50) anzulegen, wenn sich der erste Schiebesteckverbinder (31) zur zweiten Klemmlasche (22) bewegt, sodass der Begrenzungsmechanismus (50) entlang der Seitenwand nach außen gleitet, und das elastische Glied (5233) komprimiert wird, und der Begrenzungsmechanismus auch erneut unter der elastischen Rückstellkraft des elastischen Glieds (5233) an der Schlitzwand eines angrenzenden Einführungsschlitzes (3111) anliegt, wenn sich der Begrenzungsmechanismus zum Einführungsschlitz (3111) bewegt.

7. Klemmhalter nach einem der Ansprüche 1-6, **dadurch gekennzeichnet, dass** der Antriebsmechanismus weiter einen zweiten Schiebesteckverbinder (32) umfasst, der mit der zweiten Klemmlasche (22) verbunden ist, und verschiebbar mit dem Untergehäuse (10) verbunden ist, und ein Übertragungsglied (33), das mit dem Untergehäuse verbunden ist, wobei das Übertragungsglied (33) den ersten Schiebesteckverbinder (31) und den zweiten Schiebesteckverbinder (32) antreiben kann, um sich anhand seiner eigenen Bewegung gleichzeitig in entgegengesetzte Richtungen zu bewegen, sodass sich die erste Klemmlasche (21) und die zweite Klemmlasche (22) zueinander bewegen, um die bewegliche Vorrichtung zu klemmen, oder sich die erste Klemmlasche (21) und die zweite Klemmlasche (22) voneinander wegbewegen, um die bewegliche Vorrichtung freizugeben.

8. Klemmhalter nach Anspruch 7, **dadurch gekennzeichnet, dass** das Übertragungsglied (33) ein großes Zahnrad umfasst, das drehbar mit dem Untergehäuse (10) verbunden ist, und eine erste Klemmzahnstange (311), die mit dem großen Zahnrad eingreift, auf einer Seite des ersten Schiebesteckverbinder (31) bereitgestellt ist.

9. Klemmhalter nach Anspruch 8, **dadurch gekennzeichnet, dass** eine zweite Klemmzahnstange (321), die mit dem großen Zahnrad eingreift, auf einer Seite des zweiten Schiebesteckverbinder (32) bereitgestellt ist, wobei die erste Klemmzahnstange (311) und die zweite Klemmzahnstange einander gegenüber angeordnet sind, und sich das große Zahnrad zwischen der ersten Klemmzahnstange (311) und der zweiten Klemmzahnstange (321) befindet, und gleichzeitig die erste Klemmzahnstange (311) und die zweite Klemmzahnstange antreiben kann, um sich in gegenüberliegende Richtungen zu bewegen.

10. Klemmhalter nach Anspruch 9, **dadurch gekennzeichnet, dass** das Untergehäuse (10) eine obere Grundplatte (11), eine untere Grundplatte (12), die gegenüber der oberen Grundplatte angeordnet ist, und ein Seitenpaneel (13) zum Verbinden der oberen Grundplatte (11) und der unteren Grundplatte (12) umfasst, wobei ein Aufnahmehohlraum durch die obere Grundplatte (11), die untere Grundplatte (12) und das Seitenpaneel (13) zusammen eingeschlossen wird, wobei sich das Übertragungsglied (33) in dem Aufnahmehohlraum befindet, das Seitenpaneel mit zwei Einführungsöffnungen (101) bereitgestellt ist, die einander gegenüber angeordnet sind, und eine Pressöffnung (102), die von den Einführungsöffnungen (101) beabstandet ist, wobei der erste Schiebesteckverbinder (31) und der zweite Schiebesteckverbinder (32) jeweils durch die beiden Einführungsöffnungen (101) hindurch angeordnet sind, und der Begrenzungsmechanismus (50) durch die Pressöffnung (102) hindurch angeordnet ist.

11. Klemmhalter nach Anspruch 7, **dadurch gekennzeichnet, dass** der Klemmhalter eine erste Torsionsfeder (81) umfasst, die mit dem ersten Schiebesteckverbinder (31) verbunden ist, die erste Klemmlasche (21) drehbar mit dem ersten Schiebesteckverbinder verbunden ist, und ein Ende der ersten Torsionsfeder (81) mit dem Schiebesteckverbinder (31) verbunden ist, und das andere Ende davon mit der ersten Klemmlasche verbunden ist; und der Klemmhalter weiter eine zweite Torsionsfeder (82) umfasst, die mit dem zweiten Schiebesteckverbinder (32) verbunden ist, die zweite Klemmlasche (22) drehbar mit dem zweiten Schiebesteckverbinder (32) verbunden ist, und ein Ende der zweiten Torsionsfeder (82) mit dem zweiten Schiebesteckverbinder (32) verbunden ist und das andere Ende davon mit der zweiten Klemmlasche (22) verbunden ist.

12. Klemmhalter nach Anspruch 11, **dadurch gekennzeichnet, dass** der Klemmhalter weiter eine erste Rolle (711) umfasst, die auf einer Seite, die der zweiten Klemmlasche (22) zugewandt ist, der ersten Klemmlasche (21) drehbar verbunden ist, und eine zweite Rolle (712), die auf einer Seite, die der ersten Klemmlasche zugewandt ist, der zweiten Klemmlasche drehbar verbunden ist, die Erstreckungsrichtung der Drehachse der ersten Rolle (711) senkrecht zur Bewegungsrichtung des ersten Schiebesteckverbinders (31) verläuft, und die zweite Erstreckungsrichtung der Drehachse der zweiten Rolle (712) senkrecht zur Bewegungsrichtung des zweiten Schiebesteckverbinders (32) verläuft.

13. Klemmhalter nach Anspruch 12, **dadurch gekennzeichnet, dass** die erste Rolle eine erste Rolle (711) umfasst, die drehbar mit der ersten Klemmlasche (21) verbunden ist, und ein erstes Gleitschutzorgan (721), mit dem die erste Rolle (711) ummantelt ist, und die zweite Rolle eine zweite Rolle (712) umfasst, die drehbar mit der zweiten Klemmlasche (22) verbunden ist, und ein zweites Gleitschutzorgan (722), mit dem die zweite Rolle (712) ummantelt ist.

14. Klemmhalter nach einem der Ansprüche 1-6, **dadurch gekennzeichnet, dass** der Klemmhalter weiter einen Befestigungsmechanismus (60) umfasst, der mit dem Untergehäuse (10) verbunden ist, und zur Verbindung mit einer externen Vorrichtung verwendet wird.

## Revendications

1. Support de serrage pour fixer un dispositif mobile, comprenant :
un boîtier inférieur (10) ;
un mécanisme de serrage comprenant une première patte de serrage (21) sur un côté du boîtier inférieur (10) et faisant saillie depuis le boîtier inférieur, et une seconde patte de serrage (22) sur l'autre côté du boîtier inférieur et agencée à l'opposé de la première patte de serrage (21) ;
un mécanisme d'entraînement comprenant au moins un premier connecteur coulissant (31) connecté à la première patte de serrage (21) et connecté en coulissant au boîtier inférieur (10), dans lequel la première patte de serrage (21) peut entraîner le premier connecteur coulissant (31) pour pouvoir se rapprocher ou s'éloigner de la deuxième patte de serrage (22), et dans lequel le mécanisme de serrage a un état de serrage dans lequel le dispositif mobile est serré et un état desserré dans lequel le dispositif mobile est relâché ;
un mécanisme de réinitialisation (40) ayant une élasticité et deux extrémités de celui-ci étant respectivement connectées au boîtier inférieur (10) et au premier connecteur coulissant (31), et le mécanisme de réinitialisation (40) ayant un état compressé dans lequel le mécanisme de réinitialisation est compressé et génère une force de rappel élastique lorsque la première patte de serrage (21) se rapproche de la seconde patte de serrage (22) et un état relâché dans lequel la force de rappel élastique est relâchée pour amener la première patte de serrage (21) à s'éloigner de la seconde patte de serrage (22) ; et
un mécanisme de limitation (50) connecté au boîtier inférieur (10), le mécanisme de limitation (50) ayant un état déverrouillé dans lequel le mécanisme de limitation se tient à l'écart du premier connecteur coulissant (31) et un état verrouillé dans lequel le mécanisme de limitation (50) vient en butée contre le premier connecteur coulissant (31) pour restreindre le déplacement de la première patte de serrage (21) s'éloignant de la seconde patte de serrage (22) ;
dans lequel, lorsqu'une force externe vers la seconde patte de serrage (22) est appliquée à la première patte de serrage (21) pour rapprocher la première patte de serrage de la seconde patte de serrage, le mécanisme de réinitialisation (40) est dans l'état compressé pendant que le mécanisme de serrage est dans l'état de serrage, de sorte que le mécanisme de serrage serre le dispositif mobile ;
lorsque le mécanisme de limitation (50) commute de l'état déverrouillé à l'état verrouillé, le mécanisme de serrage reste dans l'état compressé ; et
lorsque la force externe est éliminée et le mécanisme de limitation (50) commute de l'état verrouillé à l'état déverrouillé, le mécanisme de réinitialisation (40) peut commuter de l'état compressé à l'état relâché, de sorte que le mécanisme de serrage commute de l'état de serrage à l'état desserré,
**caractérisé en ce que** le mécanisme de limitation (50) comprend en outre un arbre de rotation (51) connecté au boîtier inférieur (10), et un ensemble de verrouillage (52) connecté en tournant à l'arbre de rotation, dans lequel l'ensemble de verrouillage comprend un adaptateur (521) connecté en tournant à l'arbre de rotation (51), un loquet de verrouillage en forme de L (522) connecté à l'adaptateur (521) et utilisé pour venir en butée contre le premier connecteur coulissant (31), et une pièce à main (523) connectée à l'adaptateur et utilisée pour une commande portative.

2. Support de serrage selon la revendication 1, **caractérisé en ce que** l'extrémité libre du loquet de verrouillage (522) peut venir en butée contre le premier connecteur coulissant (31) pour restreindre un déplacement de la première patte de serrage (21) s'éloignant de la seconde patte de serrage (22).

3. Support de serrage selon la revendication 2, **caractérisé en ce que** la pièce à main (523) comprend une tige de pressage (5231) qui est connectée en coulissant au boîtier inférieur (10) et qui peut se rapprocher ou s'éloigner du premier connecteur coulissant (31), et une bielle (5232) avec une extrémité connectée en tournant à la tige de pressage (5231) et l'autre extrémité connectée à l'adaptateur (521), dans lequel la tige de pressage (5231) peut entraîner le loquet de verrouillage (522) à s'éloigner du premier connecteur coulissant (31) lorsqu'il se rapproche du premier connecteur coulissant (31) de sorte que le mécanisme de limitation (50) commute de l'état verrouillé à l'état déverrouillé, et entraîner le loquet de verrouillage à se rapprocher du premier connecteur coulissant (31) lorsqu'il s'éloigne du premier connecteur coulissant (31) de sorte que le mécanisme de limitation (50) commute de l'état déverrouillé à l'état verrouillé.

4. Support de serrage selon la revendication 3, **caractérisé en ce que** l'ensemble de verrouillage (52) comprend en outre un organe élastique (5233) avec une extrémité connectée au boîtier inférieur (10) et l'autre extrémité connectée à la tige de pressage (5231), dans lequel la direction d'extension de l'organe élastique (5233) est conforme à la direction de déplacement de la tige de pressage (5231), l'organe élastique (5233) est compressé et génère une force de rappel élastique lorsqu'une force externe est appliquée à la tige de pressage (5231) pour rapprocher la tige de pressage du premier connecteur coulissant (31), et la tige de pressage s'éloigne du premier connecteur coulissant sous l'effet de la force de rappel élastique de l'organe élastique (5233) lorsque la force externe est éliminée.

5. Support de serrage selon la revendication 4, **caractérisé en ce que** le premier connecteur coulissant (31) a une face d'insertion sur un côté de celui-ci faisant face au mécanisme de limitation (50), la face d'insertion est pourvue de multiples fentes d'insertion (3111) à des intervalles et agencées parallèlement l'une à l'autre, la direction d'extension des fentes d'insertion (3111) est perpendiculaire à la direction de mouvement du premier connecteur coulissant (31), et le mécanisme de limitation est apte à être inséré dans les fentes d'insertion (3111) et a une face de butée venant en butée contre la face d'insertion.

6. Support de serrage selon la revendication 5, **caractérisé en ce que** la fente d'insertion (3111) a une coupe transversale en forme de V, et la pente de la paroi latérale, vers la première patte de serrage (21), de la fente d'insertion (3111) permet au premier connecteur coulissant (31) d'appliquer une force d'actionnement perpendiculaire à la paroi latérale au mécanisme de limitation (50) lorsque le premier connecteur coulissant (31) se rapproche de la seconde patte de serrage (22) de sorte que le mécanisme de limitation (50) coulisse vers l'extérieur le long de la paroi latérale et l'organe élastique (5233) est compressé, et également le mécanisme de limitation vient en butée contre la paroi de fente d'une fente d'insertion (3111) adjacente à nouveau sous l'effet de la force de rappel élastique de l'organe élastique (5233) lorsque le mécanisme de limitation se rapproche de la fente d'insertion (3111).

7. Support de serrage selon l'une quelconque des revendications 1 à 6, **caractérisé en ce que** le mécanisme d'entraînement comprend en outre un second connecteur coulissant (32) connecté à la seconde patte de serrage (22) et connecté en coulissant au boîtier inférieur (10), et un organe de transmission (33) connecté au boîtier inférieur, dans lequel l'organe de transmission (33) peut entraîner le premier connecteur coulissant (31) et le second connecteur coulissant (32) à se déplacer simultanément dans des directions opposées par son propre déplacement, de sorte que la première patte de serrage (21) et la seconde patte de serrage (22) se rapprochent l'une de l'autre pour serrer le dispositif mobile, ou la première patte de serrage (21) et la seconde patte de serrage (22) s'éloignent l'une de l'autre pour libérer le dispositif mobile.

8. Support de serrage selon la revendication 7, **caractérisé en ce que** l'organe de transmission (33) comprend un grand engrenage connecté en tournant au boîtier inférieur (10), et une première crémaillère de serrage (311) s'engrenant avec le grand engrenage est prévue sur un côté du premier connecteur coulissant (31).

9. Support de serrage selon la revendication 8, **caractérisé en ce qu'**une seconde crémaillère de serrage (321) s'engrenant avec le grand engrenage est prévue sur un côté du second connecteur coulissant (32), la première crémaillère de serrage (311) et la seconde crémaillère de serrage sont agencées à l'opposé l'une de l'autre, et le grand engrenage est situé entre la première crémaillère de serrage (311) et la seconde crémaillère de serrage (321) et peut simultanément entraîner la première crémaillère de serrage (311) et la seconde crémaillère de serrage à se déplacer dans des directions opposées.

10. Support de serrage selon la revendication 9, **caractérisé en ce que** le boîtier inférieur (10) comprend une plaque de base supérieure (11), une plaque de base inférieure (12) agencée à l'opposé de la plaque de base supérieure, et un panneau latéral (13) pour connecter la plaque de base supérieure (11) et la plaque de base inférieure (12), dans lequel une cavité d'accueil est enfermée par la plaque de base supérieure (11), la plaque de base inférieure (12) et le panneau latéral (13) solidairement, l'organe de transmission (33) est situé dans la cavité d'accueil, le panneau latéral est pourvu de deux ouvertures d'insertion (101) agencées à l'opposé l'une de l'autre et d'une ouverture de pressage (102) espacée des ouvertures d'insertion (101), le premier connecteur coulissant (31) et le second connecteur coulissant (32) sont respectivement disposés à travers les deux ouvertures d'insertion (101), et le mécanisme de limitation (50) est disposé à travers l'ouverture de pressage (102).

11. Support de serrage selon la revendication 7, **caractérisé en ce que** le support de serrage comprend en outre un premier ressort de torsion (81) connecté au premier connecteur coulissant (31), la première patte de serrage (21) est connectée en tournant au premier connecteur coulissant et une extrémité du premier ressort de torsion (81) est connectée au premier connecteur coulissant (31) et l'autre extrémité de celui-ci est connectée à la première patte de serrage ; et le support de serrage comprend en outre un second ressort de torsion (82) connecté au second connecteur coulissant (32), la seconde patte de serrage (22) est connectée en tournant au second connecteur coulissant (32), et une extrémité du second ressort de torsion (82) est connectée au second connecteur coulissant (32) et l'autre extrémité de celui-ci est connectée à la seconde patte de serrage (22).

12. Support de serrage selon la revendication 11, **caractérisé en ce que** le support de serrage comprend en outre un premier rouleau (711) connecté en tournant sur un côté, faisant face à la seconde patte de serrage (22), de la première patte de serrage (21) et un second rouleau (712) connecté en tournant sur un côté, faisant face à la première patte de serrage, de la seconde patte de serrage, la direction d'extension de l'axe de rotation du premier rouleau (711) est perpendiculaire à la direction de déplacement du premier connecteur coulissant (31), et la direction d'extension de l'axe de rotation du second rouleau (712) est perpendiculaire à la direction de déplacement du second connecteur coulissant (32).

13. Support de serrage selon la revendication 12, **caractérisé en ce que** le premier rouleau comprend le premier rouleau (711) connecté en tournant à la première patte de serrage (21) et un premier organe antiglissement (721) gainé sur le premier rouleau (711), et le second rouleau comprend le second rouleau (712) connecté en tournant à la seconde patte de serrage (22) et un second organe antiglissement (722) gainé sur le second rouleau (712) .

14. Support de serrage selon l'une quelconque des revendications 1 à 6, **caractérisé en ce que** le support de serrage comprend en outre un mécanisme de fixation (60) connecté au boîtier inférieur (10) et utilisé pour une connexion à un dispositif externe.
